# DEMANDE DE BREVET EUROPEEN

(11) **EP 1 108 909 A1**
(43) Date de publication de la demande: **20.06.2001**
(21) Numéro de dépôt: 99870261.7
(22) Date de dépôt: 16.12.1999
(51) Int. Cl.: F16D 3/00, F16C 11/12

(54) **Dispositif d'accouplement de deux arbres rotatifs**

(71) Demandeur: Techspace Aero S.A., 4041 Herstal (BE)
(72) Inventeur: Delobel, Pierre, 4031 Angleur (BE)
(74) Mandataire: Van Malderen, Joelle

(57) **Abrégé**

La présente invention se rapporte à un dispositif d'accouplement de deux arbres rotatifs (2,5 et 20,50), caractérisé en ce qu'au moins l'un des deux arbres (2,20) présente une zone élastique (1,10) qui est partie intégrante dudit arbre et qui est disposée en dehors de la zone d'accouplement (3,30).

## Description

### Objet de l'invention

La présente invention se rapporte à un dispositif d'accouplement de deux arbres rotatifs.

### Etat de la technique

Beaucoup de mécanismes permettant d'assurer une liaison entre deux arbres rotatifs sont connus. Cette liaison a pour but de maintenir et d'assurer une transmission régulière du couple entre les deux arbres, même dans le cas où ceux-ci ne sont pas parfaitement alignés.

A titre d'exemple, on a proposé d'utiliser des pièces intermédiaires dont les faces de contact peuvent glisser en formant un crabot ou un croisillon.

On a également proposé d'utiliser des pièces intermédiaires présentant des cannelures avec un jeu contrôlé.

Il a aussi été proposé d'utiliser une pièce intermédiaire par exemple en élastomère, qui présente une faculté à la déformation et qui peut ainsi rattraper le manque d'alignement des arbres.

Ces diverses solutions augmentent cependant de manière importante le nombre de pièces nécessaires à l'accouplement, ce qui augmente par là-même l'encombrement et le coût du dispositif.

En outre, étant donné que des contractions et dilatations thermiques peuvent avoir encore une certaine influence sur ce type d'assemblage, ceci limite de manière importante l'intensité des fluctuations de température que l'assemblage peut supporter. La gamme de températures à laquelle peut fonctionner cet accouplement s'en trouve elle aussi limitée.

### Buts de l'invention

La présente invention vise à proposer un dispositif d'accouplement d'arbres rotatifs qui permet de surmonter les différents problèmes connus selon l'état de la technique.

A titre complémentaire, la présente invention vise à proposer une solution dont le coût de réalisation est réduit en limitant le nombre de pièces nécessaires audit accouplement.

La présente invention vise de plus à proposer une solution qui réduit l'encombrement.

La présente invention vise également à proposer une solution qui permet une utilisation pour une gamme relativement large de températures.

La présente invention vise aussi à proposer une solution qui permet une utilisation pour des fluctuations ou variations de température relativement importantes.

Par ailleurs, la présente invention vise à s'affranchir du problème de l'imprécision angulaire de l'accouplement et du jeu entre les différents arbres à assembler.

Enfin, la présente invention vise à proposer une solution qui supporte mieux les chocs dynamiques.

### Principaux éléments caractéristiques de l'invention

La présente invention se rapporte à un dispositif d'accouplement de deux arbres rotatifs, caractérisé en ce qu'au moins l'un des deux arbres présente à son extrémité une zone à déformation élastique qui est partie intégrante dudit arbre et qui est disposée en dehors de la zone d'accouplement.

Selon une première forme d'exécution préférée, la zone élastique est constituée par une partie creuse présentant des fentes ou entailles, ces fentes ou entailles étant disposées le long dudit arbre, perpendiculairement à son axe.

De préférence, lesdites fentes ou entailles sont disposées de façon alternées les unes par rapport aux autres.

De préférence, lesdites fentes ou entailles présentent une forme oblongue.

Selon une deuxième forme d'exécution préférée, la zone élastique se présente sous la forme d'une partie creuse sous forme de soufflet, ledit soufflet pouvant être constitué par une succession de rainures ou creux et d'excroissances disposés circulairement sur la partie creuse dudit arbre.

### Brève description des dessins

La figure 1 représente une vue en perspective d'une première forme d'exécution du dispositif d'accouplement selon la présente invention.

La figure 2 représente une vue en coupe longitudinale de cette même forme d'exécution.

La figure 3 représente une vue en perspective d'une deuxième forme d'exécution du dispositif d'accouplement selon la présente invention.

La figure 4 représente une vue en coupe longitudinale de cette même forme d'exécution.

### Description de plusieurs formes d'exécution de l'invention

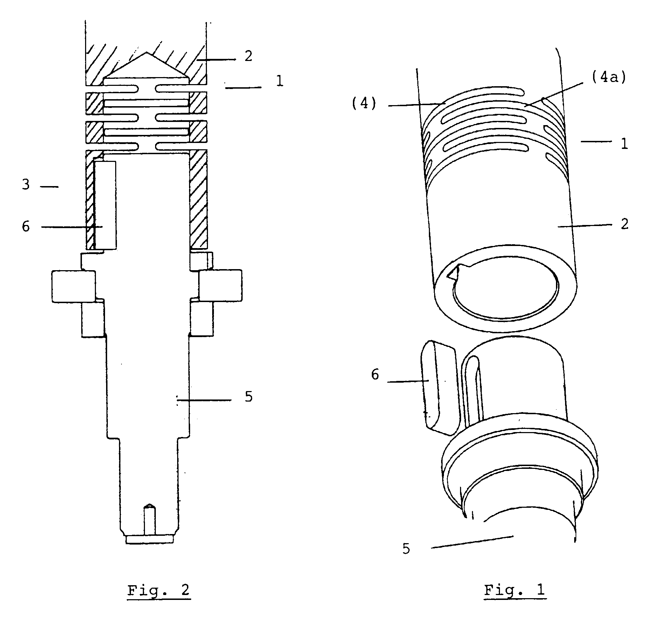

Une première forme d'exécution préférée de l'invention est représentée sur les figures 1 et 2. Dans cette forme d'exécution, les deux arbres (2 et 5) sont essentiellement cylindriques. L'arbre externe (2) est creux, au moins au niveau de la zone élastique (1). L'arbre interne (5) peut être creux. La zone élastique (1) fait partie intégrante de l'arbre externe (2) et est disposée en dehors de la zone d'accouplement (3). La zone élastique (1) est constituée par une partie creuse présentant des fentes ou entailles (4, 4a), ces fentes ou entailles (4, 4a) étant disposées le long dudit arbre, perpendiculairement à son axe. Lesdites fentes ou entailles sont disposées de façon alternée (4, 4a). De préférence, la hauteur de la zone élastique (1) est égale au diamètre de l'arbre externe (2), chaque fente ou entaille une largeur sensiblement égale à la moitié de l'épaisseur de la partie creuse de l'arbre externe (2). De préférence, la largeur de chaque fente ou entaille est d'environ 2 mm. De préférence, l'espacement entre deux fentes sucessives le long de l'arbre externe (2) est sensiblement égal à l'épaisseur de la partie creuse dudit arbre. De préférence, il est d'environ 5 mm. Par ailleurs, la distance entre deux fentes ou entailles diamétralement opposées est sensiblement égale à la moitié de l'épaisseur de la partie creuse de l'arbre externe ou égale à la largeur d'une fente ou entaille. De préférence, elle est d'environ 5 mm. L'accouplement de l'arbre externe (2) et de l'arbre interne (5) se fait par emboîtement de l'arbre interne (5) dans l'arbre externe (2) au niveau de la zone d'accouplement (3). L'accouplement est bloqué par exemple à l'aide d'une clavette (6) de manière classique. D'autres systèmes tels qu'un accouplement par croisillons ou cannelures peuvent également être envisagés.

La zone élastique (1) donne ainsi à l'ensemble une certaine capacité de déformation élastique et autorise une certaine tolérance angulaire dans l'alignement des pièces.

La zone élastique (1) correspond à une partie souple usinée à même l'arbre externe (2). Pour réaliser la zone élastique (1), tout d'abord on fore un trou à l'extrémité de l'arbre externe (2) pour réaliser la partie creuse et ensuite on usine les entailles par fraisage, électroérosion ou même à l'aide d'une scie.

Une alternative serait que la zone élastique (1) soit partie intégrante non plus de l'arbre externe (2) mais de l'arbre interne (5) et ceci en dehors de la zone d'accouplement.

Une autre alternative serait qu'à la fois l'arbre externe (2) et l'arbre interne (5) disposent d'une zone élastique.

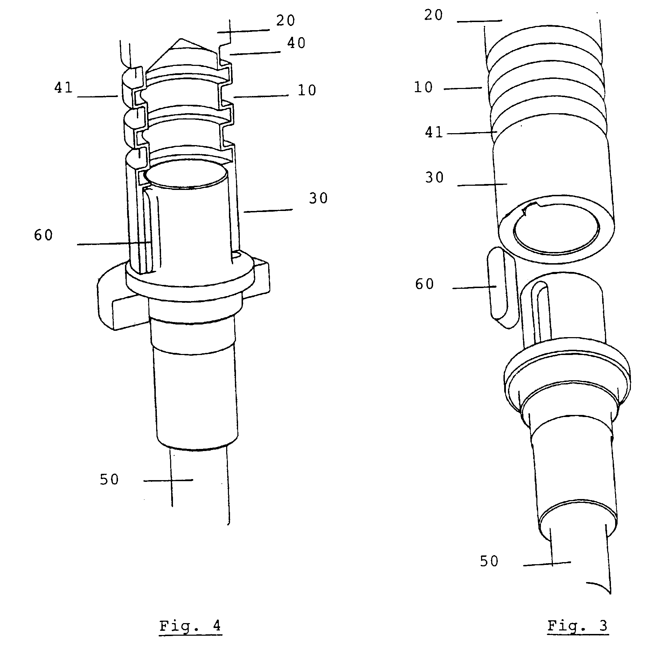

Une seconde forme d'exécution préférée de l'invention est représentée sur les figures 3 et 4. Dans cette seconde forme d'exécution, les deux arbres (20 et 50) sont essentiellement cylindriques. L'arbre externe (20) est creux, au moins au niveau de la zone élastique (10). La zone élastique (10) fait partie intégrante de l'arbre externe (20) et est disposée en dehors de la zone d'accouplement (30). La zone élastique (10) se présente sous la forme d'une partie creuse sous forme de soufflet. Le soufflet est constitué par une succession de rainures (40) et d'excroissances (41) disposées circulairement sur la partie creuse dudit arbre externe (20) perpendiculairement à l'axe dudit arbre (20). Les rainures (40) et les excroissances (41) sont disposées successivement le long de la zone élastique (10). De préférence, le soufflet a une hauteur sensiblement égale au diamètre de l'arbre externe (2) et une épaisseur d'environ 2 mm. De préférence, chaque rainure (40) a une hauteur et une largeur de dimensions sensiblement égales, d'environ 5 mm. De préférence, le rapport entre la hauteur d'une rainure et l'épaisseur du soufflet est compris entre 2 et 5.

L'accouplement de l'arbre externe (20) et de l'arbre interne (50) se fait par emboîtement de l'arbre interne (50) dans l'arbre externe (20) au niveau de la zone d'accouplement (30). L'accouplement est bloqué à l'aide d'une clavette (60) de manière classique. Tout autre système d'accouplement constitué par un croisillon, un crabot ou des cannelures peut également être envisagé.

La zone élastique (10) donne ainsi à l'ensemble une certaine capacité de déformation élastique et autorise une certaine tolérance angulaire dans l'alignement des pièces.

Les deux formes d'exécution préférées de l'invention présentent plusieurs avantages par rapport aux solutions existantes:
- elles évitent l'utilisation de pièces rapportées ou soudées, grâce à la présence de la zone élastique (1,10) qui fait partie intégrante d'au moins un des deux arbres;
- l'expérience accumulée dans ce type d'accouplement a montré qu'il présentait un bon comportement mécanique vis-à-vis des sollicitations de fatigue;
- on peut choisir la raideur de la pièce que l'on veut obtenir en fonction des dimensions des fentes ou entailles ou l'épaisseur de la zone élastique. Pour cela, on peut s'appuyer sur les outils actuels d'analyse des contraintes et des déformations (éléments finis, maillages paramétrés) qui permettent de définir rapidement les paramètres géométriques optimums répondant à des besoins spécifiques;
- comparativement à d'autres formes de l'état de la technique, la géométrie de la zone élastique (1,10) autorise une raideur angulaire importante.

## Revendications

1. Dispositif d'accouplement de deux arbres rotatifs (2,5 et 20,50), caractérisé en ce qu'au moins l'un des deux arbres (2,20) présente une zone élastique (1,10) qui est partie intégrante dudit arbre et qui est disposée en dehors de la zone d'accouplement (3,30).

2. Dispositif selon la revendication 1, caractérisée en ce que les deux arbres présentent une zone élastique qui est partie intégrante desdits arbres et qui est disposée en dehors de la zone d'accouplement.

3. Dispositif d'accouplement selon la revendication 1 ou 2, caractérisé en ce que la zone élastique (1) est constituée par une partie creuse présentant des fentes ou entailles (4,4a).

4. Dispositif d'accouplement selon la revendication 3, caractérisé en ce que lesdites fentes ou entailles (4,4a) sont situées sur l'arbre externe (2).

5. Dispositif d'accouplement selon la revendication 3, caractérisé en ce que lesdites fentes ou entailles (4,4a) sont situées sur l'arbre interne (5).

6. Dispositif d'accouplement selon la revendication 3 à 5, caractérisé en ce que lesdites fentes ou entailles (4,4a) sont disposées le long dudit arbre, perpendiculairement à l'axe de l'arbre.

7. Dispositif d'accouplement selon la revendication 3 à 6, caractérisé en ce que lesdites fentes ou entailles (4,4a) sont disposées de façon alternée les unes par rapport aux autres.

8. Dispositif d'accouplement selon les revendications 3 à 7, caractérisé en ce que les fentes ou entailles (4,4a) présentent une forme oblongue.

9. Dispositif d'accouplement selon la revendication 1 ou 2, caractérisé en ce que la zone élastique (10) se présente sous la forme d'une partie creuse sous forme de soufflet.

10. Dispositif d'accouplement selon la revendication 9, caractérisé en ce que ledit soufflet est situé sur l'arbre externe (20).

11. Dispositif d'accouplement selon la revendication 9 ou 10, caractérisé en ce que le soufflet est constitué par une succession de rainures (40) et d'excroissances (41) disposées circulairement sur la partie creuse selon la circonférence dudit arbre.
